# EUROPEAN PATENT APPLICATION

(11) **EP 2 071 001 A1**
(43) Date of publication of application: **17.06.2009**
(21) Application number: 07425780.9
(22) Date of filing: 10.12.2007
(51) Int. Cl.: C09J 7/00

(54) **Printable adhesive tape and method for the production thereof**

(71) Applicant: Syrom 90 S.P.A., 50059 Vinci, Firence (IT)
(72) Inventor: Nassi, Aldo, 50059 Sovigliana Vinci Firenze (IT); Lepori, Alessandro, 50053 Pontorme, Empoli Firenze (IT)
(74) Representative: Mannucci, Michele

(57) **Abstract**

The self-adhesive tape comprises:
- a backing (3) constituted by a polymer film with a first face and a second face (S1, S2);
- a pressure sensitive adhesive coating (4) on the first face (S1) of the backing;
- a release coating (5) containing an aliphatic polyurethane resin, applied to the second face of the backing.

## Description

### Technical field

The present invention relates to adhesive tapes and in particular to pressure sensitive adhesive tapes. More in particular, the invention relates to printable adhesive tapes.

### State of the art

Pressure sensitive self-adhesive tapes are usually wound in rolls making the side covered with the pressure sensitive adhesive coating adhere to the non-adhesive side of the tape of the adjacent turn.

The term "release coating" is intended as the thin film comprising a polymer release agent that is usually applied to the non-adhesive side of a self-adhesive tape in order to facilitate unwinding of the tape wound in a roll. The compositions of known release agents used to cover tapes with polypropylene backing are based on long chain polyvinyl carbamates.

These adhesive tapes are usually produced by a manufacturer that supplies them in the form of rolls to a transformer, which applies printing to the back of the tapes, for example printing to customize the product prior to sale. For this purpose, the tape is unwound and then reaches a first station, where a lacquer coating (generally chlorinated polyolefins dissolved in toluene) is applied to the back. Subsequently, the tape passes through a series of ovens in which the solvent is eliminated from the lacquer coating. After drying, the tape reaches the station in which the actual printing takes place. This is normally implemented by applying ink with a flexographic system. Inks are generally based on polyamide or modified nitrocellulose, dissolved in isopropyl alcohol and octane or ethyl acetate. After printing the tape passes through an oven where the ink is dried.

The last step of the process takes place in a third station, where a coating of release agent, usually polyvinyl carbamate dissolved in xylene and toluene, is applied. Also in this case drying takes place by passing the tape through an oven.

In recent years self-adhesive tapes have been designed with polypropylene backing, which allow the printing process to be greatly simplified. In order to make self-adhesive tapes printable, covering of the non-adhesive face with mixtures of release agents, generally polyvinyl carbamate and substances with good properties of ink receptivity, has been proposed. Substances with these properties are, for example, polyamide and ketone resins and chlorinated polyolefins, see IT-B-1252882, IT-B-1242717 and EP-A-1 693 428.

Printing of these self-adhesive tapes consists simply of an operation to unwind the tape, print and dry the inks and subsequently rewind the tape. In this case, therefore, there is no need to apply a coating of release agent after printing. However, even this simplified printing process entails the use of inks dissolved in flammable solvents that are harmful for humans and the environment.

### Summary of the invention

An aspect of the invention consists in the implementation of a self-adhesive tape, i.e. a pressure-sensitive adhesive tape, which allows a simplified printing process of the aforesaid type to be used, avoiding the use of inks in flammable solvents or which in any case cause problems from an environmental viewpoint.

The present invention provides for a self-adhesive tape provided with a release coating printable with the simplified printing process using aqueous dispersion inks.

In substance the self-adhesive tapes comprises: a backing constituted by a polymer film; a pressure sensitive adhesive coating on a first face of the polymer backing; and a release coating on the second face of the polymer backing. Characteristically, the release coating comprises an aliphatic polyurethane resin.

Advantageously, the self-adhesive tape is printed on the back, i.e. on the face opposite the one to which the adhesive coating is applied, with an ink containing an aliphatic polyurethane resin, analogous to that constituting the release coating. It has surprisingly been found that by using the same polyurethane resin in the release coating and in the ink with which printing is implemented on the release coating, effective adhesion of the ink to the release coating is obtained, so that the use of a subsequent coating of release agent is not required. The percentage of polyurethane resin in the ink can be equal to or greater than 1% in weight and preferably equal to or greater than 5% in weight, i.e. between 5 and 30% in weight and preferably between 5 and 20% in weight referred to the overall weight of the dispersion ink, i.e. before evaporation of the solvent (water).

Moreover, it is possible to use for this purpose an aqueous dispersion ink, rather than one based on toxic and/or flammable solvents, or in any case harmful for the environment or dangerous. It has surprisingly been found that a water-based ink adheres adequately to the release coating when this contains a percentage of polyurethane resins analogous to the resins forming the base of the release coating.

In some embodiments, the ink also contains one or more components selected from the group comprising: an acrylic resin, an antiblocking additive, a slip agent, a surfactant.

According to some embodiments, the polymer film forming the backing is based on polypropylene.

In some embodiments, the second face of the polymer backing is treated with a surface activation treatment to facilitate adhesion of the release coating. According to some embodiments the first face of the backing is also treated with the surface activation treatment. The surface activation treatment can, for example, be a corona discharge treatment or a flame treatment. If present, the treatment can be equal to or greater than 38 mN/m.

The pressure sensitive adhesive coating can be constituted by any suitable material. For example, it can comprise an adhesive mass containing: natural rubber, thermoplastic rubber, tackifier resins, or combinations thereof.

In some embodiments, on the first face of the backing, on which the adhesive coating is provided, a primer coating of the adhesive is also applied, to adhere the adhesive to the polymer film backing.

Preferably, the release coating has a weight per surface unit of between 0.02 and 1.5 g/m².

According to a different aspect, the invention relates to a method for the production of a self-adhesive tape (i.e. a pressure sensitive adhesive tape) comprising a backing constituted by a polymer film, an adhesive coating on a first face of the backing and a release coating on a second face of the backing, wherein the release coating is formed by means of an aliphatic polyurethane resin. Preferably, the aliphatic polyurethane resin forms a release coating with a friable and vitreous consistency.

According to some advantageous embodiments of the invention, printing is implemented on the release coating by means of an aqueous dispersion ink, characteristically containing a percentage of aliphatic polyurethane resin equal or analogous to that contained in the underlying release coating, on which printing is implemented.

Printing of the adhesive tape can be implemented in line, downstream of application of the pressure sensitive adhesive coating and of the release coating to the back of the backing. However, preferably and in a manner known per se, printing is implemented after the adhesive tape, to which the adhesive coating and the release coating have been applied, has been unwound and separated into rolls. In this case, according to an embodiment of the invention, the method includes the steps of:
1. feeding the backing along a processing path;
2. applying said adhesive coating to the first face of the backing and said release coating to the second face of the backing;
3. winding the adhesive tape, comprising said backing with the adhesive coating and the release coating, into a roll or reel;
4. unwinding the backing from the roll or reel and printing the second face of the backing applying said ink to the release coating;
5. rewinding the printed backing.

In some embodiments, the method can include a step to activate the surface of the first face of the backing to facilitate adhesion of the adhesive coating and/or of the second face to facilitate adhesion of the release coating.

According to some embodiments, a release coating with a dry weight between 0.02 e 1.5 g/m² is applied to the backing.

Further characteristics and embodiments of the method and of the adhesive tape according to the invention are set forth in the appended claims and described hereunder with reference to some embodiments.

### Brief description of the drawings

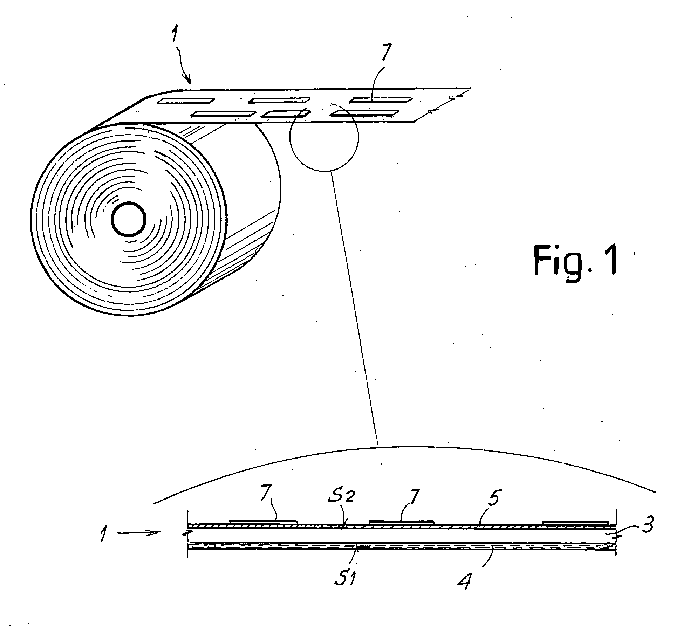

In the only figure, the drawing shows a schematic cross section of the adhesive tape in an embodiment of the invention. The representation is schematic and not in scale and, in particular, the thicknesses of the various coatings are greatly enlarged with respect to the actual thicknesses to allow representation thereof.

### Detailed description of embodiments of the invention

In the figure, the numeral 1 indicates as a whole the adhesive tape. It includes a polymer coating 3, preferably polypropylene, the two opposite faces or surfaces of which are indicated with S1 and S2. The surface S1 receives a coating of pressure sensitive glue or adhesive, indicated with 4, while the surface S2 receives a release coating 5 on which printing, schematically indicated with 7, can be implemented.

The release coating 5 is constituted by aliphatic polyurethane resins, available on the market in the form of aqueous dispersion. These adhere well to the polypropylene backing, preferably with flame or corona discharge treatment, and they themselves have moderate release properties.

In some embodiments the water-dispersed polyurethane resins used are PP 25W (Ichemco Srl, via 11 Settembre 5 20012 Cuggiono (MI) Italy) and P.U. 1621 (Casalpinia Chemicals S.p.A., via Marsala 34/A 21013 Gallarate (VA) Italy):
PP 25 W (Ichemco) / P.U. 1621 (Cesalpinia Chemicals)
Aqueous dispersion of aliphatic polyurethane
Aspect: opalescent liquid
Dry residue: 25% in weight
pH: 7-9
lonicity: anionic
Brookfield viscosity at 25 °C: < 200 mPa s
Density 1.03 g/ml

Preferably, preparation of the polyurethane for deposition of the release coating is implemented by diluting the dispersion in water or in isopropyl alcohol. The percentage of the polymer component is preferably between 0.5 and 10 % in weight.

The process to prepare the self-adhesive tape does not differ from prior art. The polypropylene film backing 3 first undergoes, on the face S1 and on the face S2, a flame or electrical discharge (corona) treatment for the purpose of modifying the surface thereof and make it suitable to receive the adhesive and release coatings; the level of treatment is preferably equal to or greater than 38 mN/m.

Preparation of the self-adhesive tape is implemented in a single step and consists in the operations of applying a primer coating (not shown in the figure) and an adhesive coating 4 to the face S1 of the treated film 3, followed by application of the release coating 5 formed of aliphatic polyurethane resin, or in any case containing a relevant percentage of this resin.

The primer coating is generally constituted by a solution or dispersion of elastomers and resins. The solvents of these solutions are eliminated through hot air leaving a dry residue of 0.5-1.5 g/m² on the backing.

The adhesives used to deposit the adhesive coating 4 are of the conventional type, being constituted by organic solvent solutions principally containing elastomers and tackifier resins of different nature, such as aliphatic, terpenic, colophony derivatives.

After deposition of the solution containing the adhesive, the solvent is eliminated through hot air, leaving a residue of 10-25 g/m² on the backing.

In other embodiments, the adhesive coating can also be applied in molten state using the hot melt technique. In this case the adhesive 4 is deposited directly on the backing 3 without interposition of the primer, which is not necessary. The adhesives used with this technique are constituted by block elastomeric copolymers (SIS, SBS), tackifier resins and plasticizers.

The polyurethane solution according to the invention is then applied to the opposite face S2 of the backing 3, after this has undergone flame or corona discharge treatment, following the conventional technique and the solvent is then evaporated in the oven at temperatures between 70 and 100°C until complete evaporation of the solvent, leaving a dry residue of 0.02-1.5 g/m² on the face or surface S2 of the backing 3.

After drying of the coating 5 of release agent, the tape obtained is wound in reels and then cut into rolls having the desired dimension.

The printing operation is then implemented starting from a pre-wound tape. This operation is implemented with the flexographic system on standard machines on the market.

According to the invention, printing 7 is implemented using aqueous dispersion inks containing at least 5% in weight of the same polyurethane resin which constitutes the release coating 5 of the tape, naturally as well as the water, colored pigments, any acrylic resins, additives such as antiblocking agents, slip agents and surfactants normally used to produce aqueous dispersion inks.

The presence of polyurethane resin in the ink ensures that the ink 7 adheres to the release coating 5 of the tape 1 and that the release properties of the printed coating are maintained.

### Example

By way of example, table I below gives the mean values, obtained using PSTC (Pressure Sensitive Tape Council) and AFERA (Association des Fabricants Europeens de Rubans Auto-adhesifs) methods, of the characteristics of a self-adhesive tape according to the invention comprising a BOPP film backing (Radil T 28 µm by Radici film S.p.A. via Enrico Fermi 46 33058 S. Giorgio di Nogaro (UD) Italy), a release coating constituted by the active part of PP 25 W and in which the adhesive coating of conventional type was deposited by "hot melt" technique.

**Table I**

| TECHNICAL DATA | Test method | u.m. | Value |
|---|---|---|---|
| UNWIND FORCE | AFERA 4013 | N/cm | 1,1 |
| ADHESION TO METAL | PSTC-1 | N/cm | 5.0 |
| ROLLING BALL TACK | PSTC-6 | cm | 4 |

Printing of the tape as above was implemented with an L33 machine manufactured by Siat S.p.A. (via Puecher 22 22078 Turate (CO) Italy), using aqueous dispersion inks with 30% in weight of PP 25 W (Ichemco).

Some parameters were checked again 60 days after printing, obtaining the data indicated in Table II below.

**Table II**

| TECHNICAL DATA | Test method | u.m. | Value |
|---|---|---|---|
| UNWIND FORCE | AFERA 4013 | N/cm | 1.2 |
| ADHESION TO METAL | PSTC-1 | N/cm | 5.0 |
| ROLLING BALL TACK | PSTC-6 | cm | 5 |
| INK TRANSFER | | | ABSENT |

## Claims

1. A self-adhesive tape including:
- a backing constituted by a polymer film with a first face and a second face;
- a pressure sensitive adhesive coating on the first face of said backing;
- a release coating on the second face of said backing, wherein said release coating comprises an aliphatic polyurethane resin.

2. Self-adhesive tape as claimed in claim 1, wherein an ink containing an aliphatic polyurethane resin, equal or analogous to the resin of said release coating, is applied to said release coating.

3. Self-adhesive tape as claimed in claim 2, wherein said ink is an ink applied in the form of aqueous dispersion.

4. Self-adhesive tape as claimed in claim 2 or 3, wherein said ink further contains one or more components chosen from the group comprising: an acrylic resin, an antiblocking additive, a slip agent, a surfactant.

5. Adhesive tape as claimed in one or more of the preceding claims, wherein said polymer film forming the backing is based on polypropylene.

6. Adhesive tape as claimed in one or more of the preceding claims, wherein said aliphatic polyurethane resin forms a friable and vitreous release coating.

7. Adhesive tape as claimed in one or more of the preceding claims, wherein said second face of the backing is treated with a surface activation treatment to facilitate adhesion of the release coating.

8. Adhesive tape as claimed in one or more of the preceding claims, wherein said first face of the backing is treated with a surface activation treatment.

9. Adhesive tape as claimed in claim 8 or 9, wherein said surface activation treatment is chosen from the group comprising: a corona discharge treatment, a flame treatment.

10. Adhesive tape as claimed in claim 7, 8 or 9, wherein said treatment is equal to or greater than 38 mN/m.

11. Adhesive tape as claimed in one or more of the preceding claims, wherein said pressure sensitive adhesive coating comprises an adhesive mass chosen from the group comprising: natural rubber, thermoplastic rubber, tackifier resins, or combinations thereof.

12. Adhesive tape as claimed in one or more of the preceding claims, wherein a primer coating of the adhesive is applied to said first face of the backing, the adhesive mass forming the pressure sensitive adhesive coating being applied to said primer coating.

13. Adhesive tape as claimed in one or more of the preceding claims, wherein said release coating has a weight per surface unit between 0.02 and 1.5 g/m².

14. Adhesive tape as claimed in one or more of the preceding claims, wherein said ink comprises a percentage in weight of said aliphatic polyurethane resin equal to or greater than 5% in relation to the overall weight of the aqueous dispersion ink.

15. A method for the production of an adhesive tape including a backing constituted by a polymer film, an adhesive coating on a first face of the backing and a release coating on a second face of the backing, wherein said release coating is formed by means of an aliphatic polyurethane resin.

16. Method as claimed in claim 15, wherein said release coating is formed with a friable and vitreous consistency.

17. Method as claimed in claim 15 or 16, wherein printing is implemented on the release coating by means of an aqueous dispersion ink.

18. Method as claimed in claim 15, 16 or 17, wherein printing is implemented on the release coating by means of an ink containing an aliphatic polyurethane resin equal or analogous to the resin forming said release coating..

19. Method as claimed in claim 18, wherein said ink contains a percentage of said aliphatic polyurethane resin equal to or greater than 5% in weight, in relation to the weight of the ink before evaporation of the solvent (water).

20. Method as claimed in claim 17, 18 or 19, comprising the steps of:
a. feeding the backing along a processing path;
b. applying said adhesive coating to the first face of the backing and said release coating to the second face of the backing;
c. winding the adhesive tape, comprising said backing with the adhesive coating and the release coating, into a roll or reel;
d. unwinding the backing from the roll or reel and printing the second face of the backing applying said ink to the release coating;
e. rewinding the printed backing.

21. Method as claimed in one or more of claims 15 to 20, comprising the step of surface activation of the first face of the backing to facilitate adhesion of the adhesive coating.

22. Method as claimed in one or more of claims 15 to 21, comprising the step of surface activation of the second face of the backing to facilitate adhesion of the release coating .

23. Method as claimed in claim 21 or 22, wherein said first and/or said second face of the backing are activated by means of a treatment chosen from the group comprising: corona discharge treatment; flame treatment.

24. Method as claimed in one or more of claims 21 to 23, wherein said first and/or said second face of the backing is activated with a treatment equal to or greater than 38 mN/m.

25. Method as claimed in one or more of claims 15 to 24, wherein a release coating with a dry weight between 0.02 and 1.5 g/m² is applied to said backing.

26. Method as claimed in one or more of claims 15 to 25, wherein said polymer film is a polypropylene based film.

27. Method as claimed in one or more of claims 15 to 26, wherein a primer coating, to which the adhesive coating is subsequently applied, is applied to said first face of the backing.
